# EUROPÄISCHE PATENTSCHRIFT

(11) **EP 1 748 839 B1**
(45) Veröffentlichungstag und Bekanntmachung des Hinweises auf die Patenterteilung: **01.04.2020**
(21) Anmeldenummer: 05737721.0
(22) Anmeldetag: 22.04.2005
(51) Int. Cl.: B01J 8/06, B01J 8/00, B01J 35/00, B01J 23/00, B01J 23/888, B01J 35/02

(54) **VERFAHREN ZUR STRUKTURIERTEN BEFÜLLUNG VON KONTAKTROHREN EINES KONTAKTROHRBÜNDELS**
METHOD FOR STRUCTURALLY FILLING CONTACT TUBES OF A BANK OF CONTACT TUBES
PROCEDE DE REMPLISSAGE STRUCTURE DE TUBES DE CONTACT D'UN FAISCEAU DE TUBES DE CONTACT

(30) Priorität: 07.05.2004 DE 102004023249; 07.05.2004 US 568699 P
(43) Veröffentlichungstag der Anmeldung: 07.02.2007
(73) Patentinhaber: BASF SE, 67056 Ludwigshafen am Rhein (DE)
(72) Erfinder: DIETERLE, Martin, 68167 Mannheim (DE); EGER, Knut, 67117 Limburgerhof (DE); MÜLLER-ENGEL, Klaus, Joachim, 76297 Stutensee (DE); HAMMON, Ulrich, 68163 Mannheim (DE); SCHLIEPHAKE, Volker, 67105 Schifferstadt (DE)
(74) Vertreter: BASF IP Association
(86) Internationale Anmeldenummer: PCT/EP2005/004351
(87) Internationale Veröffentlichungsnummer: WO 2005/113123

(56) Entgegenhaltungen:
- EP-A- 1 440 730
- WO-A-01/94006
- GB-A- 1 427 252
- US-A- 2 310 907
- US-A- 3 778 962
- US-A- 5 266 546
- US-A- 5 550 298

## Beschreibung

Vorliegende Erfindung betrifft ein Verfahren zur strukturierten Befüllung von Kontaktrohren eines Kontaktrohrbündels, bei dem man individuelle Kontaktrohre des Kontaktrohrbündels in einheitlicher Weise von unten nach oben abschnittsweise mit voneinander unterscheidbaren Zusammenstellungen aus Katalysatorformkörpern befüllt.

Verfahren zur Durchführung heterogen katalysierter Gasphasenreaktionen am in den meist vertikal angeordneten Rohren von Rohrbündelreaktoren (Reaktoren, die ein in einem Reaktionsbehälter enthaltenes Bündel von Kontaktrohren aufweisen) befindlichem Katalysatorfestbett sind ebenso bekannt wie die dafür benötigten Rohrbündelreaktoren (vgl. z.B. DE-A 44 31 949, EP-A 700 714). Es kann sich dabei sowohl um endotherme als auch um exotherme Gasphasenreaktionen handeln. In beiden Fällen wird das Reaktionsgasgemisch durch das in den sogenannten Kontaktrohren des Rohrbündelreaktors befindliche Katalysatorfestbett geführt und während der Verweilzeit der Reaktanden an der Katalysatoroberfläche setzen sich die Reaktanden teilweise oder vollständig um. Die Reaktionstemperatur in den Kontaktrohren wird dadurch kontrolliert, dass man um die in einem Behälter untergebrachten Kontaktrohre des Rohrbündels einen fluiden Wärmeträger (ein Wärmeaustauschmittel) führt, um dem Reaktionssystems Energie zu- oder um aus dem Reaktionssystem Energie abzuführen. Dabei können Wärmeträger und Reaktionsgasgemisch über dem Rohrbündelreaktor sowohl im Gleichstrom als auch im Gegenstrom geführt werden.

Neben der Möglichkeit, das Wärmeaustauschmittel dabei in einfacher Weise im wesentlichen unmittelbar längs zu den Kontaktrohren zu führen, kann diese Längsführung auch lediglich über den gesamten Reaktionsbehälter verwirklicht und dieser Längsströmung innerhalb des Reaktionsbehälter durch eine längs der Kontaktrohre aufeinanderfolgende Anordnung von Durchtrittsquerschnitte frei lassenden Umlenkscheiben, eine Querströmung so überlagert werden, dass im Längsschnitt durch das Rohrbündel ein mäanderförmiger Strömungsverlauf des Wärmeaustauschmittels resultiert (vgl. z.B. DE-A 44 31 949, EP-A 700 714, DE-PS 28 30 765, DE-A 22 01 528, DE-A 22 31 557 sowie DE-A 23 10 517).

Bei Bedarf können um die Kontaktrohre längs voneinander verschiedener Rohrabschnitte voneinander räumlich im wesentlichen getrennte Wärmeträger geführt werden. Der Rohrabschnitt, über den sich der jeweilige Wärmeträger erstreckt, repräsentiert dabei üblicherweise eine eigene Reaktionszone. Eine bevorzugt eingesetzte Variante solcher Mehrzonenrohrbündelreaktoren ist der Zweizonenrohrbündelreaktor, wie ihn z.B. die Schriften DE-C 28 30 765, DE-C 25 13 405, US-A 3,147,084, DE-A 22 01 528, EP-A 383 224 und DE-A 29 03 582 beschreiben.

Als Wärmeaustauschmittel eignen sich z.B. Schmelzen von Salzen wie Kaliumnitrat, Kaliumnitrit, Natriumnitrit und/oder Natriumnitrat, niedrig schmelzende Metalle wie Natrium, Quecksilber sowie Legierungen verschiedener Metalle, ionische Flüssigkeiten (in denen wenigstens eines der entgegengesetzt geladenen Ionen wenigstens ein Kohlenstoffatom enthält), aber auch konventionelle Flüssigkeiten wie z.B. Wasser oder hochsiedende organische Lösungsmittel (z.B. Mischungen aus Diphyl® und Dimethylphtalat).

Üblicherweise sind die Kontaktrohre aus ferritischem Stahl oder aus Edelstahl gefertigt und weisen häufig eine Wanddicke von einigen mm, z.B. 1 bis 3mm auf. Ihr Innendurchmesser beträgt meist einige cm, z.B. 10 bis 50 mm, häufig 20 bis 30 mm. Die Rohrlänge erstreckt sich im Normalfall auf wenige Meter (typisch ist eine Kontaktrohrlänge im Bereich von 1 bis 8 m, häufig 2 bis 6 m, vielfach 2 bis 4 m). Anwendungstechnisch zweckmäßig beläuft sich die im Behälter untergebrachte Anzahl an Kontaktrohren (Arbeitsrohren) auf wenigstens 1000, häufig wenigstens 3000 oder 5000 und vielfach auf wenigstens 10000. Häufig beträgt die Anzahl der im Reaktionsbehälter untergebrachten Kontaktrohre 15000 bis 30000 oder 40000 bzw. 50000. Rohrbündelreaktoren mit einer oberhalb von 50000 liegenden Anzahl von Kontaktrohren bilden eher die Ausnahme. Innerhalb des Behälters sind die Kontaktrohre im Normalfall im wesentlichen homogen verteilt angeordnet, wobei die Verteilung zweckmäßig so gewählt wird, dass der Abstand der zentrischen Innenachsen von zueinander nächstliegenden Kontaktrohren (die sogenannte Kontaktrohrteilung) 25 bis 55 mm, häufig 35 bis 45 mm beträgt (vgl. z.B. EP-A 468 290).

Im Normalfall sind jeweils wenigstens Teilmengen der Kontaktrohre (Arbeitsrohre) eines Rohrbündelreaktors, anwendungstechnisch zweckmäßig ihre Gesamtmenge, im Rahmen der Fertigungsmöglichkeiten einheitlich gefertigt. D.h., ihr Innendurchmesser, ihre Wanddicke und ihre Rohrlänge sind innerhalb enger Toleranzen identisch (vgl. WO 03/059857).

Das vorgenannte Anforderungsprofil trifft häufig auch auf die Befüllung solcher einheitlich gefertigten Kontaktrohre mit Katalysatorformkörpern zu (vgl. z.B. WO 03/057653), um einen optimalen und möglichst störungsfreien Betrieb des Rohrbündelreaktors zu gewährleisten. Insbesondere für eine optimale Ausbeute und Selektivität der im Rohrbündelreaktor durchgeführten Reaktionen ist es wesentlich, dass, vorzugsweise alle, Arbeitsrohre des Reaktors möglichst einheitlich mit dem Katalysatorbett befüllt, d.h., beschickt sind.

Arbeitsrohre werden üblicherweise von Thermorohren unterschieden, wie sie z.B. die EP-A 873 783 beschreibt. Während die Arbeitsrohre diejenigen Kontaktrohre sind, in denen die durchzuführende chemische Reaktion im eigentlichen Sinne durchgeführt wird, dienen Thermorohre in erster Linie dem Zweck, die Reaktionstemperatur in den Kontaktrohren zu verfolgen und zu steuern. Zu diesem Zweck enthalten die Thermorohre normalerweise zusätzlich zum Katalysatorfestbett eine lediglich mit einem Temperaturmessfühler beschickte, im Thermorohr längs desselben zentriert geführte Thermohülse. Im Regelfall ist die Anzahl der Thermorohre in einem Rohrbündelreaktor sehr viel kleiner als die Anzahl der Arbeitsrohre. Normalerweise beträgt die Anzahl der Thermorohre ≤20.

Das bisher gesagte trifft vor allem auf in Rohrbündelreaktoren durchgeführte heterogen katalysierte Gasphasen-Partialoxidationen wenigstens einer organischen Verbindung zu, im Verlauf derer eine vergleichsweise große Wärmemenge freigesetzt wird.

Beispielhaft genannt seien die Umsetzung von Propen zu Acrolein und/oder Acrylsäure (vgl. z.B. die DE-A 23 51 151), die Umsetzung von tert.-Butanol, iso-Buten, iso-Butan, iso-Butyraldehyd oder dem Methylether des tert. Butanols zu Methacrolein und/oder Methacrylsäure (vgl. z.B. DE-A 25 26 238, EP-A 92 097, EP-A 58 927, DE-A 41 32 263, DE-A 41 32 684 und DE-A 40 22 212), die Umsetzung von Acrolein zu Acrylsäure, die Umsetzung von Methacrolein zu Methacrylsäure (vgl. z.B. DE-A 25 26 238), die Umsetzung von o-Xylol oder Naphtalin zu Phtalsäureanhydrid (vgl. z.B. EP-A 522 871) sowie die Umsetzung von Butadien zu Maleinsäureanhydrid (vgl. z.B. DE-A 21 06 796 und DE-A 16 24 921), die Umsetzung von n-Butan zu Maleinsäureanhydrid (vgl. z.B. GB-A 1 464 198 und GB-A 1 291 354), die Umsetzung von Indanen zu z.B. Anthrachinon (vgl. z.B. DE-A 20 25 430), die Umsetzung von Ethylen zu Ethylenoxid oder von Propylen zur Propylenoxid (vgl. z.B. DE-AS 12 54 137, DE-A 21 59 346, EP-A 372 972, WO 89/0710, DE-A 43 11 608), die Umsetzung von Propylen und/oder Acrolein zu Acrylnitril (vgl. z.B. DE-A 23 51 151), die Umsetzung von iso-Buten und/oder Methacrolein zu Methacrylnitril (d.h., der Begriff der partiellen Oxidation soll in dieser Schrift auch die partielle Ammoxidation, d.h., eine partielle Oxidation im Beisein von Ammoniak, umfassen), die oxidative Dehydrierung von Kohlenwasserstoffen (vgl. z.B. DE-A 23 51 151), die Umsetzung von Propan zu Acrylnitril oder zu Acrolein und/oder Acrylsäure (vgl. z.B. DE-A 101 31 297, EP-A 1 09 0684, EP-A 608 838, DE-A 100 46 672, EP-A 529 853, WO 01/96270 und DE-A 100 28 582) etc..

Bei den zur Durchführung heterogen katalysierter Gasphasenreaktionen am in den Rohren von Rohrbündelreaktoren befindlichen Katalysatorfestbett zu verwendenden Katalysatoren handelt es sich normalerweise um Aktivmassen, die zu Formkörpern unterschiedlichster Geometrie geformt sein können (sogenannte Katalysatorformkörper). Beispielsweise kommen als solche Formkörper Kugeln, Tabletten, Stränge, Ringe, Spiralen, Pyramiden, Zylinder, Prismen, Quader, Würfel, etc. in Betracht.

Dabei kann der Formkörper im einfachsten Fall nur aus katalytisch aktiver Masse, die gegebenenfalls mit inertem Material verdünnt sein kann, bestehen. Solche Katalysatorformkörper werden üblicherweise als Vollkatalysatoren bezeichnet.

Im Fall von Vollkatalysatoren kann die Formgebung z.B. dadurch erfolgen, dass man katalytisch aktive Pulvermasse (z.B. eine pulverförmige Multielementoxidaktivmasse) zur gewünschten Katalysatorgeometrie verdichtet (z.B. durch Tablettieren, Sintern, Extrudieren oder Strangpressen). Dabei können Formungshilfsmittel zugesetzt werden.

Alternativ kann die Formgebung auch so erfolgen, dass man einen geometischen Körper aus katalytisch nicht aktivem Material (aus Inertmaterial) mit Aktivmasse beschichtet. Ebenso wie die Vollkatalysatorformkörper kann auch ein solcher inerter Trägerkörper regelmäßig oder unregelmäßig geformt sein. Das Beschichten kann in einfachster Weise z.B. dadurch erfolgen, dass man die Oberfläche eines inerten Trägerkörpers mittels eines flüssigen Bindemittels befeuchtet und nachfolgend pulverförmige Aktivmasse an der befeuchteten Oberfläche anhaftet. Die dabei resultierenden Katalysatoren werden als Schalenkatalysatoren bezeichnet.

Geeignete inerte Trägerkörper sind für viele heterogen katalysierte Gasphasenreaktionen poröse oder unporöse Aluminiumoxide, Siliciumdioxid, Thorumdioxid, Zirkondioxid, Siliciumcarbid oder Silikate wie Magnesium- oder Aluminiumsilicat (z.B. Steatit des Typs C220 der Fa. CeramTec), aber auch Metalle wie z.B. Edelstahl oder Aluminium.

Anstelle den geometrischen inerten (inert heißt hier in der Regel, dass wenn das Reaktionsgasgemisch unter den Reaktionsbedingungen über eine nur aus Verdünnungsformkörpern bestehende Beschickung geführt wird, der Umsatz der Reaktanden ≤5mol%, meist ≤2mol-% beträgt) Trägerkörper mit Aktivmasse zu beschichten, kann man den Trägerkörper in vielen Fällen auch mit einer Lösung der katalytisch aktiven Substanz tränken und nachfolgend das Lösungsmittel verflüchtigen. Die auf diese Weise resultierenden Katalysatorformkörner werden üblicherweise als Träger- oder Tränckatalysatoren bezeichnet.

Die Längstausdehnung solcher Katalysatorfomkörper (längste mögliche direkte Verbindungslinie zweier auf der Oberfläche des Katalysatorformkörpers befindlicher Punkte) beträgt meist 1 bis 20 mm, oft 2 bis 15 mm und vielfach 3 bzw. 4 bis 10 bzw. 8 oder 6 mm. Im Fall von Ringen liegt die Wanddicke darüber hinaus üblicherweise bei 0,5 bis 6 mm, häufig bei 1 bis 4 bzw. 3 oder 2 mm.

Besonders häufig handelt es sich bei den angewandten Aktivmassen um Edelmetalle (z.B. Ag) oder um oxidische Massen, die neben Sauerstoff lediglich ein oder mehr als ein anderes Element enthalten (Multielementoxidmassen, z.B. Multimetalloxidmassen).

Bei den wenigsten heterogen katalysierten Gasphasenreaktionen am in den Rohren von Rohrbündelreaktoren befindlichen Katalysatorfestbett besteht das Katalysatorfestbett aus einer einzigen, längs des individuellen Kontaktrohrs homogenen Schüttung aus Katalysatorformkörpern, die das Kontaktrohr vollständig ausfüllt.

Vielmehr besteht eine Kontaktrohrfüllung in der Mehrzahl aller Fälle aus mehreren voneinander unterscheidbaren übereinander angebrachten Katalysatorschüttungsabschnitten. Längs des einzelnen Schüttungsabschnitts besteht jeweils eine homogene Schüttung aus Katalysatorformkörpern. Deren Zusammensetzung (Zusammenstellung) ändert sich jedoch regelmäßig abrupt beim Übergang von einem Schüttungsabschnitt zum nächsten Schüttungsabschnitt. Es entstehen so längs eines individuellen Kontaktrohres Katalysatorfestbettschüttungen, die eine heterogene Struktur aufweisen. Man spricht auch von einer strukturierten Befüllung (bzw. Schüttung) der Kontaktrohre.

Beispiele für solche strukturierten Befüllungen von Kontaktrohren sind unter anderem in den Schriften EP-A 979 813, EP-A 90 074, EP-A 456 837, EP-A 1 106 598, US-A 5,198,581 und US-A 4,203,903 beschrieben. Ein weiteres Verfahren zur Befüllung von Kontaktrohren mit Katalysatorformkörpern ist aus der Schrift US-A 3,778,962 bekannt.

Im einfachsten Fall können sich zwei voneinander verschiedene Katalysatorbefüllungsabschnitte in einem Reaktionsrohr nur dadurch voneinander unterscheiden, dass eine einzige Sorte von Aktivmasse aufweisenden Katalysatorformkörpern mit einem unterschiedlichen Anteil von inerten, keine Aktivmasse aufweisenden, Formkörpern (auch Verdünnungsformkörper genannt; im einfachsten Fall können es inerte Trägerkörper sein; es kann sich aber auch um aus Metall bestehende Formkörper handeln) verdünnt sind. Dabei können die Verdünnungsformkörper die gleiche oder auch eine andere Geometrie (ihr möglicher Längstausdehnungsbereich weist in der Regel dieselben Grenzen wie bei den Katalysatorformkörpern auf) wie die Katalysatorformkörper aufweisen. Durch eine Aneinanderreihung solcher, einen unterschiedlichen Verdünnungsgrad aufweisender, Katalysatorbefülfungsabschnitte kann man, jeweils spezifisch an die Erfordernisse der auszuführenden Gasphasenreaktion angepasst, längs eines Kontaktrohres Verdünnungsprofile (Verdünnungsstrukturen) der unterschiedlichsten Art erzeugen. In vielen Fällen wird die Verdünnungsstruktur so gewählt, dass der Verdünnungsgrad in Strömungsrichtung des Reaktiongsgasgemisches abnimmt (d.h., die volumenspezifische Aktivmasse nimmt in Strömungsrichtung zu; dort wo die Reaktandenkonzentration hoch ist, ist die volumenspezifische Aktivität niedrig und umgekehrt). Bei Bedarf kann das Verdünnungsprofil (die Aktivitätsstrukturierung) aber auch umgekehrt oder völlig anders gewählt werden. Im einfachsten Fall kann eine strukturierte Befüllung eines Kontaktrohres auch so aussehen, dass im Kontaktrohr von z.B. unten nach oben zunächst ein Katalysatorbefüllungsabschnitt mit Aktivmasse aufweisenden Katalysatorformkörpern (die mit Verdünnungsformkörpern verdünnt sein können) und daran anschließend ein nur aus Verdünnungsformkörpern bestehender Katalysatorbefüllungsabschnitt folgt (solche nur aus Verdünnungsformkörpern bestehende Befüllungsabschnitte sollen in dieser Schrift auch als Befüllungsabschnitte mit Katalysatorformkörpern betrachtet werden). Auch können zwei identisch zusammengesetzte Befüllungsabschnitte mit Aktivmasse aufweisenden Katalysatorformkörpern durch einen solchen nur Verdünnungsformkörper umfassenden Abschnitt unterbrochen werden.

Selbstverständlich kann sich zur Erzeugung einer Aktivitätsstrukturierung in einem Befüllungsabschnitt eines Kontaktrohres aber auch ein sich längs des Abschnitts nicht änderndes Gemisch aus zwei oder mehr voneinander verschiedenen, Aktivmasse aufweisenden, Katalysatorformkörpern befinden. Dabei können sich die Katalysatorformkörper lediglich in ihrer Geometrie, oder lediglich in ihrer Aktivmassenzusammensetzung, oder lediglich in der physikalischen Beschaffenheit ihrer Aktivmasse (z.B. Porenverteilung, spezifische Oberfläche, etc.), oder lediglich im Gewichtsanteil der auf einen inerten Verdünnungsformkörper aufgebrachten Aktivmasse voneinander unterscheiden. Sie können jedoch auch in mehreren oder in allen der vorgenannten Unterscheidungsmerkmale voneinander verschieden sein. Zusätzlich können sie auch Verdünnungsformkörper umfassen. Anstelle einer Aktivitätsstrukturierung kann die Kontaktrohrbefüllung auch eine Selektivitätsstrukturierung aufweisen. Letzteres ist insbesondere dann zweckmäßig, wenn die Gasphasenreaktion im Sinne einer Folgereaktion abläuft, und individuelle Aktivmassen die verschiedenen aufeinanderfolgenden Reaktionsschritte maßgeschneidert zu katalysieren vermögen.

Insgesamt repräsentiert bei einer (von unten nach oben) abschnittsweise strukturierten Befüllung von Kontaktrohren ein in einem-Reaktionsrohr einheitlich befüllter Abschnitt eine bestimmte Zusammenstellung aus Katalysatorformkörpern, die nur aus einer Sorte von Katalysatorformkörpern, nur aus einer Sorte von Verdünnungsformkörpern, aus einem Gemisch von Katalysatorformkörpern, aus einem Gemisch von Katalysatorformkörpern und Verdünnungsformkörpern, oder aus einem Gemisch verschiedener Verdünnungsformkörper bestehen kann.

Ein strukturiert befülltes Kontaktrohr weist somit definitionsgemäß wenigstens zwei, häufig drei oder vier, vielfach fünf oder sechs, oder sieben oder acht bis zehn oder mehr Befüllungsabschnitte auf, die in der Zusammenstellung der in ihnen enthaltenen Katalysatorformkörper hinsichtlich deren Art und/oder Menge voneinander unterscheidbar, d.h. in der Regel nicht identisch sind.

Eine einheitliche Befüllung von solchermaßen strukturiert befüllten Kontaktrohren erfordert nun einerseits, dass sich in einander entsprechenden Kontaktrohrabschnitten die gleiche Zusammenstellung an Katalysatorformkörpern befindet, die längs desselben Abschnitts nicht fluktuiert. Sie erfordert aber auch andererseits, dass sich in einander entsprechenden Kontaktrohrabschnitten identische Mengen derselben Zusammenstellung an Katalysatorformkörpern befinden.

Um dieses Ziel bei einer Vielzahl von (tausend und mehr) von Kontaktrohren (Arbeitsrohren) zu erreichen, werden im Stand der Technik Katalysatorfüllmaschinen eingesetzt, die die jeweilige Zusammenstellung an Katalysatorformkörpern unmittelbar aus die Zusammenstellung enthaltenden Vorratsbehältern heraus in das jeweilige Kontaktrohr hineinportionieren (vgl. z.B. DE-A 199 34 324, WO 98/14392 und US-A 4,402,643). Als primäre Zielgröße wird dabei eine gleichmäßige Einfüllrate angestrebt (d.h., eine während des Befüllvorgangs pro Zeiteinheit möglichst konstante eingefüllte Menge an jeweiliger Katalysatorformkörperzusammenstellung). Das Produkt aus Einfüllrate und Fülldauer legt dabei die eingefüllte Portion, das Ausmaß des befüllten Abschnitts fest.

Die Verfahrensweise gemäß des Standes der Technik weist jedoch verschiedene Nachteile auf. Zum einen ist die Einfüllrate über Zeit nicht in völlig befriedigender Weise konstant, was zu Abweichungen in den eingefüllten Portionen führt. Dies rührt u.a. daher, dass sich zu füllende Formkörper quer legen und so den Formkörperauslass der Füllmaschine zeitweise partiell blockieren können. Besteht eine individuelle Zusammenstellung von Katalysatorformkörpern aus mehr als einer Formkörpersorte, kann es im Vorratsbehälter zu partieller Entmischung kommen, was letztlich zu in gewissem Umfang variierenden Zusammenstellungsschwankungen im Vergleich von einander entsprechenden Füllabschnitten in voneinander verschiedenen Kontaktrohren führt. Selbst innerhalb ein und desselben Füllabschnitts in einem individuellen Kontaktrohr können dadurch längs des Füllabschnitts Zusammenstellungsschwankungen resultieren. Häufig vermag auch die zu erzielende Geschwindigkeit der Befüllung nicht völlig zu befriedigen. Letzteres ist vor allem deshalb von Bedeutung, weil während der Kontaktrohrbefüllung die Produktion, die Gasphasenreaktion, unterbrochen ist.

Die Aufgabe der vorliegenden Erfindung bestand daher darin, ein verbessertes Verfahren zur strukturierten Befüllung von Kontaktrohren eines Kontaktrohrbündels zur Verfügung zu stellen.

Demgemäss wurde ein Verfahren zur strukturierten Befüllung von Kontaktrohren eines Kontaktrohrbündels, bei dem man individuelle Kontaktrohre des Kontaktrohrbündels in einheitlicher Weise von unten nach oben abschnittsweise mit voneinander unterscheidbaren Zusammenstellungen aus Katalysatorformkörpern befüllt, gefunden, das dadurch gekennzeichnet ist, dass man zur Erzeugung eines bestimmten Befüllungsabschnitts in den Kontaktrohren zunächst einheitliche Mengenportionen der zugehörigen Zusammenstellung aus Katalysatorformkörpern herstellt, durch Umhüllen solcher Mengenportionen mit einem Verpackungsmittel mit einer einheitlichen Menge der Zusammenstellung aus Katalysatorformkörpern befüllte Packungen erzeugt und in jedes der individuellen Kontaktrohre eine Anzahl der Packungen entleert und das Verhältnis aus Innendurchmesser D des Kontaktrohres zu Längstausdehnung L der in einer Packung enthaltenen Katalysatorformkörper 2:1 bis 20:1 beträgt.

Das Einheitlichkeitsintervall der Mengenportionen beträgt erfindungsgemäß in der Regel (bezogen auf den Zahlenmittelwert aller einheitlich erzeugten Mengenportionen) weniger als ± 1 Gew.-% bzw. weniger als ± 0,3 Gew.-%, oder weniger als ± 0,1 Gew.-%, und in günstigen Fällen weniger als ± 0,01 Gew.-%. Das relative Einheitlichkeitsintervall ist um so kleiner, je größer die in der Einzelpackung enthaltene Mengenportion ist.

Das erfindungsgemäße Verfahren ist generell anwendbar bei Katalysatorformkörpern, deren Längstausdehnung L (deutlich) kleiner als der Innendurchmesser D der Reaktionsrohre ist. Sie ist jedoch meist von derselben Größenordnung wie dieser Durchmesser. Das Verhältnis D/L wird häufig 2:1 bzw. 3:1 bis 20:1, bzw. 4:1 bis 10:1 betragen.

Die in einer mit Katalysatorformkörpern befüllten Packung enthaltene Mengenportion kann, der gewünschten Länge des Befüllungsabschnitts angepasst und in Schüttversuchen an transparenten Rohren entsprechender Geometrie vorab ermittelt, zweckmäßig zwischen 50 g und 5 kg betragen. Häufig wird der Umfang der Mengeportion 100 g bis 3 kg und vielfach 200 g oder 300 g bis 2 kg betragen. D.h., die Mengenportion kann sich beispielsweise auf 400 g, 600 g, 800 g, 1000 g, 1200 g, 1400 g, 1600 g und 1800 g etc. belaufen. Dem entsprechen in der Regel numerisch ähnliche Füllvolumina in l bzw. ml (d.h., im Bereich von 25 bzw. 50 ml bis 5 bzw. 10 l liegend).

Erfindungsgemäß ganz besonders bevorzugt ist die Mengenportion einer Packung so bemessen, dass ihr Entleeren in ein Reaktionsrohr in selbigem den gewünschten Befüllungsabschnitt vollständig erzeugt. Die Mengenportion kann im Sinn einer erhöhten Homogenität des Befüllungsabschnitts aber auch so bemessen sein, dass es zur Erzeugung eines gewünschten Befüllungsabschnitts des Entleerens von mehr als einer (häufig 2 bis 10, vielfach 2 bis 5) Packung bedarf.

Als Verpackungsmittel können Tüten, Beutel, Säcke, Schachteln, Dosen, Fächer, Eimer, Kisten, Körbe, Fässer, Flaschen u.s.w. dienen. Als Verpackungsmaterial können je nach Aktivmasse Papier, Pappe, Holz, Glas, keramische Stoffe, Metalle (Bleche und Folien), Kunststoffe, Schaumstoffe etc. verwendet werden. Die Wahl des Verpackungsmittels und der Verpackung hängt neben der Art der Aktivmasse auch noch von der Art der nach der Verpackung z.B. während der Lagerung zu erwartenden äußeren Einflüsse ab. Beispielsweise können Temperaturbeständigkeit, Stoßunempfindlichkeit, Lichtundurchlässigkeit, Luftundurchlässigkeit, Wasserdampfundurchlässigkeit etc. gefordert sein.

Beispielsweise kann es auch zweckmäßig sein, zur Verpackung Schrumpffolien zu verwenden, die die bei Unterdruck verpackten Katalysatorformkörper eng umschließen und ein besonders einfaches Stapeln von Packungen ermöglichen. Dabei ist generell darauf zu achten, dass das Verpackungsmaterial die Katalysatorqualität nicht z.B. dadurch beeinträchtigt, dass das Verpackungsmaterial während einer Lagerung von Packungen Fremdstoffe wie z.B. flüchtige Weichmacher oder Restmonomere abgibt, die die katalytisch aktive Oberfläche belegen und blockieren können.

Erfindungsgemäß besonders bevorzugtes Verpackungsmaterial ist transparentes Polyethylen (high, low oder medium density), insbesondere dann, wenn die Aktivmasse ein Multielementoxid, z.B. ein Multimetalloxid ist. Günstig ist es in der Regel, wenn die Feuchtigkeits(Wasserdampf)durchlässigkeit der Verpackung bei 25°C ≤ 1,0 g m⁻² d⁻¹ (d = day) beträgt. Zu diesem Zweck können z.B. aluminiumbeschichtete Beutel oder Beutel mit Flüssigkristall-Polyester-Filmen verwendet werden. Bevorzugtes Verpackungsmittel sind Beutel, insbesondere wenn diese aus Kunststoff (z.B. Polyethylen) gefertigt sind und sich luftdicht verschweißen lassen.

Die Erzeugung von mit einer einheitlichen Menge einer Zusammenstellung aus Katalysatorformkörpern befüllte erfindungsgemäß anzuwendende Packungen kann vorab des eigentlichen Befüllungsvorgangs mittels Verpackungsmaschinen äußerst effizient und mit hoher Geschwindigkeit durchgeführt werden. Besonders zweckmäßig sind für die erfindungsgemäße Verfahrensweise Abfüllmaschinen. Bei dieser Untereinheit der Verpackungsmaschinen liegt die Verpackung bereits in einer zum Abfüllen vorbereiteten Form vor (vielfach werden jedoch Verpackungsmaschinen verwendet, die die Verpackung aus z.B. in Rollenform bereit gestellter Ausgangsfolie selbst erzeugen). Sie enthalten als wesentliche Teile eine Dosiereinrichtung, die das Füllgut nach Gewicht oder Stückzahl unterteilt, die eigentliche Füllanlage sowie eine Verschließanlage, die z.B. durch Zwirbeln, Drehen, Falzen, Leimen, Schweißen, nach dem Nut/Feder Prinzip oder durch Aufbringen eines Verschlusses die Verpackung locker bis fest verschließt.

Umfasst die erfindungsgemäß einzufüllende Zusammenstellung von Katalysatorformkörpern mehr als eine Formkörpersorte, so erfolgt die erfindungsgemäße Erzeugung der einheitlichen Mengenportionen der Zusammenstellung zweckmäßig wie folgt.

Zunächst wird jede Formkörpersorte in großer Menge und in größt möglicher Einheitlichkeit erzeugt.

Dann werden von jeder Formkörpersorte über eine der jeweiligen Formkörpersorte zugeordnete Dosiervorrichtung kontinuierlich nach Gewicht oder Stückzahl bemessene, jeweils einheitliche Mengenportionen erzeugt und auf ein der jeweiligen Formkörpersorte zugeordnetes Fließband abgekippt. Die individuellen Fließbänder transportieren die jeweils einheitlichen Portionen der jeweiligen Formkörpersorte aufeinander abgestimmt weiter. An ihrem Ende laufen die Fließbänder zusammen, und entladen die gewünschte Menge der jeweiligen Formkörpersorte in die Packung. Auf diese Weise werden Packungen erzeugt, deren Inhalt sowohl hinsichtlich Menge als auch bezüglich Zusammenstellung ununterscheidbar ist.

Das Befüllen der Kontaktrohre kann nun in einfacher Weise so erfolgen, dass jeweils eine aus den Abmessungen der Kontaktrohre und der gewünschten Länge des Befüllungsabschnitts vorausberechnete (und in Schüttversuchen an transparenten Reaktionsrohren entsprechender Geometrie ermittelte) Anzahl an mit der Katalysatorformkörperzusammenstellung befüllten Packungen in des jeweilige Kontaktrohr entleert wird. Der Packungsinhalt einer individuellen Packung ist dabei beim erfindungsgemäßen Verfahren stets ≤ (kleiner oder gleich) der für ein individuelles Kontaktrohr gewünschten Aufnahmemenge. Häufig wird man in jedes Kontaktrohr eine gleiche Anzahl der Packungen entleeren. Erfindungsgemäß bevorzugt wird die in ein Kontaktrohr zu entleerende Anzahl ganzahlig sein. Da jede für einen Füllabschnitt vorgesehene Packung die gleiche Zusammenstellung und Menge enthält, lassen sich erfindungsgemäß so in kurzer Zeit besonders einheitliche Füllabschnitte über verschiedene Kontaktrohre erzeugen.

In einfachster Weise kann das Entleeren der Packungen in die Kontaktrohre manuell durchgeführt werden. Um das Entleeren aber auch mit möglichst einheitlicher Schüttdichte in die Kontaktrohre zu bewerkstelligen, kann man das Entleeren aber auch über eine wie in der DE-A 19934324 beschriebene Vorrichtung zum Befüllen von Rohren mit Schüttgut vornehmen. Diese verfügt über eine bestimmte Anzahl von Einfüllrohren, die simultan in die zu befüllenden Kontaktrohre abgesenkt werden können. Je Einfüllrohr verfügt die Maschine über einen Vorratsbehälter, der über einen, Schüttstutzen und eine Förderrinne mit dem jeweiligen Einfüllrohr verbunden ist. Mittels einer individuell betätigbaren Dosierzone wird der aus dem jeweiligen Vorratsbehälter zur Förderrinne ausgetragene Schüttgutstrom auf die gewünschte Förderrate in die Kontaktrohre begrenzt. Anstelle die erfindungsgemäß befüllten Packungen unmittelbar in die jeweiligen Kontaktrohre zu entleeren, kann man sie auch nacheinander gemäß Verbrauch über den jeweiligen Vorratsbehälter (das Fassungsvermögen eines Vorratsbehälters entspricht bevorzugt dem Inhalt einer Packung bzw. dem Inhalt von ein bis zwei Packungen) der vorstehend beschriebenen Füllvorrichtung mit möglichst einheitlicher Förderrate in das jeweilige Kontaktrohr hinein entleeren. Da der Vorratsbehälter zu keinem Zeitpunkt eine große Menge der zu befüllenden Zusammenstellung aus Katalysatorformkörpern enthält, wird so einerseits in natürlicher Weise einer Entmischung derselben im Vorratsbehälter entgegengewirkt und die Konstanz der Füllrate bewirkt eine möglichst gute Einheitlichkeit der Schüttdichte. Typische Förderraten können von 500 Formkörper/Minute bis zu 40000 Formkörper/Minute betragen.

Besonders bevorzugte Füllmaschinen weisen miteinander verbundene Kaskaden von Vorratsbehältern auf, die ein im wesentlichen kontinuierliches Ausführen des erfindungsgemäßen Verfahrens ermöglichen.

D.h., oberhalb eines Vorratsbehälters befindet sich ein zweiter Vorratsbehälter, der bereits mit der Mengenportion einer Packung befüllt werden kann, bevor der Mengeninhalt des darunter liegenden Vorratsbehälters vollständig entleert ist.

Die übereinander angeordneten Vorratsbehälter können aber auch mit voneinander verschiedenen Einfüllrohren verbunden sein.

Das erfindungsgemäße Verfahren eignet sich z.B. dann, wenn die Aktivmasse der in einer Packung enthaltenen Katalysatorformkörper ein Mo, Bi und Fe (z.B. ein solches der allgemeinen Formel II aus der DE-A 4442346) und/oder ein Mo und V (z.B. ein solches der allgemeinen Formel I aus der DE-A 4442346) enthaltendes Multimetalloxid ist. Es eignet sich aber auch dann, wenn die Aktivmasse der in einer Packung enthaltenen Katalysatorformkörper ein V und P (z.B. EP-A 302509; z.B. für Maleinsäureanhydridherstellung), oder ein V und Cs (z.B. EP-A 1084115, oder EP-A 1117484, oder EP-A 1311467; z.B. für die Herstellung von Phthalsäureanhydrid), oder ein Mo und P (z.B. DE-A 4329907; z.B. für Methacrylsäureherstellung) enthaltendes Multielementoxid ist.

Insbesondere eignet sich die in dieser Schrift empfohlene Verfahrensweise zum abschnittsweisen Befüllen von Kontaktrohren mit den in den Schriften EP-A 700893, EP-A 700714, DE-A 10337788, DE-A 10313210, DE-A 10313214, DE-A 10313213, DE-A 10313212, DE-A 10313211, DE-A 10313208, DE-A 10313209 für die heterogen katalysierte Partialoxidation von Propen und/oder Acrolein zu Acrylsäure empfohlenen strukturierten Kontaktrohrbefüllungen. Als Verpackungsmaterial sollte dabei ein höchstwasserdampfundurchlässiges Verpackungsmaterial verwendet werden, das luftundurchlässig verschweißt wird. Dabei kann den Empfehlungen der JP-A 2003-10695 gefolgt werden. Bei Bedarf kann dabei zusätzlich von den in der DE-A 10337998 empfohlenen Füllhilfen Gebrauch gemacht werden. Dies gilt auch für die im in dieser Schrift zitierten Stand der Technik empfohlenen Füllhilfsmaßnahmen.

Die erfindungsgemäße Verfahrensweise besticht sowohl durch den hohen Grad der mit ihr zu erzielenden Fülleinheitlichkeit als auch durch die mit ihr bei gleicher Fülleinheitlichkeit realisierbaren hohen Füllgeschwindigkeiten. Beides ist nicht zuletzt dadurch bedingt, dass Portionierung und Befüllung räumlich und zeitlich voneinander entkoppelt vorgenommen werden können. Die Länge eines in sich homogenen Füllabschnitts wird beim erfindungsgemäßen Verfahren in typischer Weise 20 cm bis 800 cm, häufig 50 cm bis 200 cm betragen.

Erfindungsgemäß besonders vorteilhaft wird man die gleiche Zusammenstellungen aus Katalysatorformkörpern enthaltenden Packungen mit einer einheitlichen Farbe versehen. Nach ihrer Entleerung in ein individuelles Reaktionsrohr zur Erzeugung des erwünschten Befüllungsabschnitts wird man das entsprechende Reaktionsrohr dann zweckmäßig als Zeichen der Erledigung mit einer Kappe derselben Farbe verschließen. Auf diese Weise lässt sich sehr einfach verhindern, dass ein Reaktionsrohr mehrfach mit ein und derselben Zusammenstellung aus Katalysatorformkörpern befüllt wird. Alternativ kann die Füllhöhe im Reaktionsrohr mit einer Meßlatte überprüft werden.

### Beispiel und Vergleichsbeispiel

A) Gemäß Beispiel 1 der DE-A 10046957 wurden 70 kg eines Vollkatalysatorrings der Geometrie 5 mm x 3 mm x 2 mm (Außendurchmesser x Länge x Innendurchmesser) hergestellt.
   Die Stöchiometrie der Aktivmasse war

   [Bi₂W₂O₉ x 2WO₃]_{0,5} x [Mo₁₂Co_{5,5}Fe_{2,94}Si_{1,59}K_{0,08}Ox]₁.

   Diese 70 kg Vollkatalysatorringe wurden mit 30 kg Steatitringen der Geometrie 7 mm x 7 mm x 4 mm homogen vermischt und von diesem Gemisch über eine Katalysatorfüllmaschine gemäß DE-A 19934324 in ein 6 m langes, transparentes Kunststoffrohr des Innendurchmessers 35 mm gefüllt, bis das Kunststoffrohr vollständig befüllt war, wobei das homogene Gemisch in seiner Gesamtmenge in einen Vorratsbehälter gegeben und aus diesem in die Kunststoffröhre gefüllt wurden.
   Visuelle Betrachtung des so gefüllten Kunststoffrohres wies auf mehreren Füllhöhen inhomogene Zonen aus.
B) Von den Vollkatalysatorringen und den Steatitringen aus A) wurden jeweils 70 g/30 g in Polyethylenbeutel gefüllt. Über den Vorratsbehälter derselben Katalysatorfüllmaschine wie in A) wurden 55 dieser befüllten Polyethylenbeutel nacheinander durch die Katalysatorfüllmaschine mit derselben Befüllrate wie in A) in ein gleiches Kunststoffrohr wie in A) entleert.
   Visuelle Betrachtung des so gefüllten Kunststoffrohres wies keine inhomogenen Zonen aus.
C) Mit den Vollkatalysatorringen aus A (Geometrie 5 mm x 3 mm x 2 mm) und Steatitringen derselben Geometrie (5 mm x 3 mm x 2 mm) wurden Mengenportionen der Zusammenstellung I "357 g Vollkatalysatorring/153 g Steatitring" mittels einer Verpackungsmaschine in Polyethylenbeutel abgepackt (Packungen I). Die insgesamt abgepackte Menge der Zusammenstellung I betrug 5,685 Tonnen. Zusätzlich wurden Mengenportionen in Polyethylenbeutel abgepackt, die als Zusammenstellung II ausschließlich den Vollkatalysatorring aus A in einer Menge von 835 g enthielten (Packungen II). Die insgesamt abgepackte Menge der Zusammenstellung II betrug 9,308 Tonnen.
   In 11148 Kontaktrohre aus ferritischem Stahl des Innendurchmessers 25,4 mm (Wanddicke: 2 mm) und der Länge 3,20 m, wurden über eine Katalysatorfüllmaschine gemäß DE-A 19934324 jeweils aufeinanderfolgend zunächst je eine Packung II (in alle Rohre) und anschließend je eine Packung I (in alle Rohre) vollständig entleert. Das Einheitlichkeitsintervall der Fülldauer der Einzelrohre war, bezogen auf den zeitlichen Zahlenmittelwert, weniger als ± 5 Sekunden. Die mittlere Fülldauer betrug 45 Sekunden. Druckverlustmessungen an 200 stochastisch herausgegriffenen gefüllten Einzelrohren mit einer Luftbelastung von 3000 NI/l•h ergaben ein Einheitlichkeitsintervall um den zahlenmittleren Durchschnittsdruckverlust von weniger als ± 3 %.
   Die gefüllten Rohre eignen sich für die Propenpartialoxidation zu Acrolein. Refilling zur Einheitlichkeitsverbesserung, wie es die WO 03/057653 empfiehlt, war nicht erforderlich.

US Provisional Patent Application No. 60/568,699, eingereicht am 07.05.2004, ist in die vorliegende Anmeldung durch Literaturhinweis eingefügt. Im Hinblick auf die oben genannten Lehren sind zahlreiche Änderungen und Abweichungen von der vorliegenden Erfindung möglich. Man kann deshalb davon ausgehen, dass die Erfindung, im Rahmen der beigefügten Ansprüche, anders als hierin spezifisch beschrieben, ausgeführt werden kann.

## Patentansprüche

1. Verfahren zur strukturierten Befüllung von Kontaktrohren eines Kontaktrohrbündels, bei dem man individuelle Kontaktrohre des Kontaktrohrbündels in einheitlicher Weise von unten nach oben abschnittsweise mit voneinander unterscheidbaren Zusammenstellungen aus Katalysatorformkörpern befüllt, **dadurch gekennzeichnet, dass** man zur Erzeugung eines bestimmten Befüllungsabschnitts in den Kontaktrohren zunächst einheitliche Mengenportionen der zugehörigen Zusammenstellung aus Katalysatorformkörpern herstellt, durch Umhüllen von solchen Portionen mit einem Verpackungsmittel mit einer einheitlichen Menge der Zusammenstellung aus Katalysatorformkörpern befüllte Packungen erzeugt und in jedes der individuellen Kontaktrohre eine Anzahl der Packungen entleert und das Verhältnis aus Innendurchmesser D des Kontaktrohres zu Längstausdehnung L der in einer Packung enthaltenen Katalysatorformkörper 2 :1 bis 20 : 1 beträgt.

2. Verfahren nach Anspruch 1, **dadurch gekennzeichnet, dass** die Menge in einer Packung an einer Zusammenstellung aus Katalysatorformkörpern 50 g bis 5 kg beträgt.

3. Verfahren nach Anspruch 1 oder 2, **dadurch gekennzeichnet, dass** die Längstausdehnung der zu befüllenden Katalysatorformkörper 1 mm bis 20 mm beträgt.

4. Verfahren nach einem der Ansprüche 1 bis 3, **dadurch gekennzeichnet, dass** die befüllten Kontaktrohre wenigstens drei voneinander unterscheidbare Befüllungsabschnitte aufweisen.

5. Verfahren nach einem der Ansprüche 1 bis 4, **dadurch gekennzeichnet, dass** die Aktivmasse der in einer Packung enthaltenen Katalysatorformkörper ein Mo, Bi und Fe und/oder ein Mo und V enthaltendes Multimetalloxid ist.

6. Verfahren nach einem der Ansprüche 1 bis 5, **dadurch gekennzeichnet, dass** die Mengenportion einer Packung so bemessen ist, dass ihr Entleeren in ein Kontaktrohr in selbigem den gewünschten Befüllungsabschnitt vollständig erzeugt.

7. Verfahren nach einem der Ansprüche 1 bis 6, **dadurch gekennzeichnet, dass** die Anzahl der Packungen manuell in das Kontaktrohr entleert werden.

8. Verfahren nach einem der Ansprüche 1 bis 7, **dadurch gekennzeichnet, dass** die Anzahl der Packungen über eine Katalysatorfüllmaschine in das Kontaktrohr entleert werden.

9. Verfahren nach Anspruch 8, **dadurch gekennzeichnet, dass** die Katalysatorfüllmaschine Vorratsbehälter aufweist, deren Fassungsvermögen der Mengenportion einer Packung entspricht.

10. Verfahren nach Anspruch 1, **dadurch gekennzeichnet, dass** als Verpackungsmittel Schrumpffolie verwendet wird.

11. Verfahren nach Anspruch 1, **dadurch gekennzeichnet, dass** als Verpackungsmittel Beutel, die aus Kunstsoff gefertigt sind und sich luftdicht verschweißen lassen, verwendet werden.

12. Verfahren nach Anspruch 1, **dadurch gekennzeichnet, dass** die Feuchtigkeitsdurchlässigkeit der Verpackung bei 25°C ≤ 1,0 g m⁻²d⁻¹ beträgt.

## Claims

1. A method of charging catalyst tubes of a bundle of catalyst tubes in a structured fashion, in which individual catalyst tubes of the bundle of catalyst tubes are charged in a uniform manner from the bottom upward in sections with different formulations of shaped catalyst bodies, wherein a particular section of the charge in the catalyst tubes is produced by firstly producing uniform amounts of portions of the appropriate formulation of shaped catalyst bodies, producing packets filled with a uniform amount of the formulation of shaped catalyst bodies by enclosing such portions in a packaging material and emptying a number of the packets into each of the individual catalyst tubes and the ratio of internal diameter D of the catalyst tube to longest dimension L of the shaped catalyst bodies present in a packet is from 2:1 to 20:1.

2. The method according to claim 1, wherein the amount in one packet of a formulation of shaped catalyst bodies is from 50 g to 5 kg.

3. The method according to claim 1 or 2, wherein the longest dimension of the shaped catalyst bodies to be charged is from 1 mm to 20 mm.

4. The method according to any of claims 1 to 3, wherein the charged catalyst tubes have at least three different sections of charge.

5. The method according to any of claims 1 to 4, wherein the active composition of the shaped catalyst bodies present in a packet is an Mo-, Bi- and Fe-containing multimetal oxide and/or an Mo- and V-containing multimetal oxide.

6. The method according to any of claims 1 to 5, wherein the amounts of a portion in a packet is such that when it is emptied into a catalyst tube it produces all of the desired section of charge in the tube.

7. The method according to any of claims 1 to 6, wherein the number of packets is emptied manually into the catalyst tube.

8. The method according to any of claims 1 to 7, wherein the number of packets is emptied into the catalyst tube by means of a catalyst charging machine.

9. The method according to claim 8, wherein the catalyst charging machine has stock containers whose capacity corresponds to the amounts of a portion in a packet.

10. The method according to claim 1, wherein shrink film is used as packaging material.

11. The method according to claim 1, wherein bags which are made of polymer and can be welded shut in an airtight manner are used as packaging material.

12. The method according to claim 1, wherein the moisture permeability of the packaging at 25°C is ≤ 1.0 g m⁻²d⁻¹.

## Revendications

1. Procédé de remplissage structuré de tubes de contact d'un faisceau de tubes de contact, selon lequel des tubes de contact individuels du faisceau de tubes de contact sont remplis d'une manière uniforme du bas vers le haut en sections avec des compositions différentes les unes des autres de corps moulés catalytiques, **caractérisé en ce que**, pour la formation d'une section de remplissage déterminée dans les tubes de contact, des portions de quantités uniformes de la composition adéquate de corps moulés catalytiques sont tout d'abord fabriquées, des garnissages remplis sont formés par enveloppement de telles portions avec un agent d'emballage avec une quantité uniforme de la composition de corps moulés catalytiques, et un certain nombre des garnissages sont vidés dans chacun des tubes de contact individuels, et le rapport entre le diamètre intérieur D du tube de contact et la dimension longitudinale L des corps moulés catalytiques contenus dans un garnissage est de 2:1 à 20:1.

2. Procédé selon la revendication 1, **caractérisé en ce que** la quantité dans un garnissage d'une composition de corps moulés catalytiques est de 50 g à 5 kg.

3. Procédé selon la revendication 1 ou 2, **caractérisé en ce que** la dimension longitudinale des corps moulés catalytiques à remplir est de 1 mm à 20 mm.

4. Procédé selon l'une quelconque des revendications 1 à 3, **caractérisé en ce que** les tubes de contact remplis comprennent au moins trois sections de remplissage différentes les unes des autres.

5. Procédé selon l'une quelconque des revendications 1 à 4, **caractérisé en ce que** la masse active des corps moulés catalytiques contenus dans un garnissage est un oxyde de plusieurs métaux contenant Mo, Bi et Fe et/ou Mo et V.

6. Procédé selon l'une quelconque des revendications 1 à 5, **caractérisé en ce que** la portion de quantité d'un garnissage est déterminée de telle sorte son vidage dans un tube de contact forme entièrement dans celui-ci la section de remplissage souhaitée.

7. Procédé selon l'une quelconque des revendications 1 à 6, **caractérisé en ce que** le nombre de garnissages sont vidés manuellement dans le tube de contact.

8. Procédé selon l'une quelconque des revendications 1 à 7, **caractérisé en ce que** le nombre des garnissages sont vidés dans le tube de contact par une machine de remplissage de catalyseur.

9. Procédé selon la revendication 8, **caractérisé en ce que** la machine de remplissage de catalyseur comprend des contenants de stockage dont la contenance correspond à la portion de quantité d'un garnissage.

10. Procédé selon la revendication 1, **caractérisé en ce qu'**un film rétractable est utilisé en tant qu'agent d'emballage.

11. Procédé selon la revendication 1, **caractérisé en ce que** des sachets qui sont fabriqués en plastique et qui peuvent être soudés de manière étanche à l'air sont utilisés en tant qu'agent d'emballage.

12. Procédé selon la revendication 1, **caractérisé en ce que** la perméabilité à l'humidité de l'emballage à 25 °C est ≤ 1,0 g m⁻²d⁻¹.
